# EUROPEAN PATENT APPLICATION

(11) **EP 4 129 452 A1**
(43) Date of publication of application: **08.02.2023**
(21) Application number: 22188133.7
(22) Date of filing: 01.08.2022
(51) Int. Cl.: B01D 53/14, C01B 17/60

(54) **PROCESS FOR REDUCTION OF SULFATE FORMATION IN A BUFFERED AQUEOUS SOLUTION**

(30) Priority: 02.08.2021 EP 21188990
(71) Applicant: Grillo-Werke Aktiengesellschaft, 47169 Duisburg (DE)
(72) Inventor: Kürten, Martin, 47169 Duisburg (DE); Pfeifer, Irina, 47169 Duisburg (DE); Fricke, Reiner, 47169 Duisburg (DE); Verhoeven, Jens, 52349 Düren (DE)
(74) Representative: dompatent von Kreisler Selting Werner - Partnerschaft von Patent- und Rechtsanwälten mbB

(57) **Abstract**

The present application refers to a process for the reduction of sulfate formation in a buffered aqueous solution during the desorption of sulfur dioxide from said buffered aqueous solution, wherein the formation of sulfates in the aqueous solution is reduced up to 70%, especially up to 75 %, preferably up to 95 %, especially up to 99 %, wherein the aqueous solution comprises at least one carboxylic acid, and wherein the desorption of sulfur dioxide from the buffered solution is performed at a pressure of 1500 mbar or below.

## Description

The present invention refers to a process for the reduction of sulfate formation in a buffered aqueous solution during the desorption of sulfur dioxide from said buffered aqueous solution, wherein the formation of sulfates in the aqueous solution is reduced up to 70%, especially up to 75 %, preferably up to 95 %, especially up to 99 %, wherein the aqueous solution comprises at least one carboxylic acid, and wherein the desorption of sulfur dioxide from the buffered solution is performed at a pressure of 1500 mbar or below.

Sulfur dioxide is a waste gas, which occurs in different types of industrial waste gases. Due to environmental regulations, sulfur dioxide is removed from the gas stream. A common way of removal sulfur dioxide from e.g. power plants burning sulfur-containing coal or oil is the reaction with CaO, with CaSO₃ as the product. Aerobic oxidation of calcium sulfite gives CaSO₄, i.e. gypsum.

Other techniques focus in the recovery of sulfur dioxide thereby using an absorption solution in which the sulfur dioxide is first absorbed and afterwards desorbed again, such es for example disclosed in EP 2 632 567 A or WO 2012/058558 A.

For removal of sulfur dioxide from this absorption solution, the solution is heated so that the energy consumption is quite high, and the temperature level of the heating medium is more than 100 °C. This often results in the generation of sulfates, which is to be avoided, as a high concentration of sulfates in the solution reduces the capacity of further absorbing sulfur dioxide from effluent gases resulting in the fact that the solution cannot be used again for further absorption processes. There is thus the need for an improved process of sulfur dioxide recovery from effluent gases with improved energy consumption and the possibility to use the absorption solution several times without high-cost purification or modification steps.

Surprisingly it was found that the formation of sulfates in an absorption solution can be reduced in a process where the temperature is controlled in the desorption process. The present invention therefore provides in a first aspect a process for the reduction of sulfate formation to at least 70% in a buffered aqueous solution during the desorption of sulfur dioxide from said buffered aqueous solution, wherein the aqueous solution comprises at least one carboxylic acid, and wherein the desorption of sulfur dioxide from the buffered solution is performed at a temperature of 110 °C or below.

The amount of sulfate in the buffered aqueous solution of carboxylic acids should be regulated. High amounts of sulfate have a highly negative impact to the absorption capability of the solution. Sulfates are formed by oxidation of the sulfur dioxide and reaction with the substance which is present as buffer in the solution. If the amount of sulfate in the solution rises to about 4% by weight to 5% by weight, the absorption capacity for sulfur dioxide drops tremendously so that the solution cannot be used any more as absorption solution. Therefore, the solution has to be treated to reduce the sulfate concentration. In practice this is achieved nowadays by continuously taking part of the solution and removing of sulfate for example by crystallization of sodium sulfate, where the sodium is from a common buffer in a buffered aqueous solution. After cleaning, the solution is transferred back to the remaining unpurified solution. This cleaning step requires evaporation of water from the solution and/or cooling of the solution, which result in high energy consumption. Thereby, the by-product decahydrate or Glauber's salt (Na₂SO₄.10H₂O) is undesired. The advantage of the present invention is the reduced formation of sulfate due to the lower temperature. This results in a lower need for treatment of the buffered aqueous solution. Lower energy consumption and less undesired by-product in the treatment are advantageous of the process conditions in the desorption column.

The removal from sulfur dioxide from an aqueous solution comprising at least one carboxylic acid is for example relevant for the cleaning of effluent gases comprising sulfur dioxide. This sulfur dioxide is removed from the gas stream by washing with respective aqueous solutions, in which the sulfur dioxide is solved. In order to re-use the aqueous solution, the sulfur dioxide is removed again by desorption at high temperature. It has now surprisingly been found that reduction of the temperature during this desorption process minimizes the oxidation from sulfur dioxide to sulfate compounds in the aqueous solution. The drop of temperature can be achieved by reducing the loss of pressure in a desorption column, if this is used for the process, or by applying a vacuum, or by reducing the heat rate.

To remove the sulphur dioxide from the aqueous solution, the solution is in a preferred embodiment heated to a temperature of 100 °C or below, preferably from 25 °C to 100 °C, especially from 30 °C to 95 °C, preferred from 35 °C to 90 °C, especially preferred from 40 °C to 85 °C. The maximum temperature should thereby not exceed the boiling temperature of the aqueous solution.

In a preferred embodiment, not only the temperature but also the pressure is adjusted during the process. By adjusting the pressure of the solution, the temperature of the aqueous carboxylic acid solution can be kept even at a lower temperature, which allows a further reduction of the oxidation of sulfite to sulfate in the aqueous solution. The pressure is preferably set to be 1500 mbar or below, especially 1200 mbar or below. Preferred are ranges of 10 mbar to 1200 mbar, preferably from 50 mbar to 1000 mbar, preferred from 100 mbar to 900 mbar, especially from 150 mbar to 800 mbar, especially preferred from 200 mbar to 750 mbar. This allows significant reduction of sulfate formation of at least 75%, preferably of up to 95%, especially up to 99%.

The process of the present invention results preferably in a reduction of the formation of sulfates in the buffered aqueous solution of at least 75 %, preferably up to 95 %, especially up to 99 %. A reduction of sulfate formation of 75 % means that the formation rate of sulfate is reduced by the factor of 4. This means that it takes about 4 times longer to reach a certain concentration of sulfates in the aqueous solution with the process of the present invention compared to conventional processes where the temperature is above 110 °C. Accordingly, the sulfate formation rate is reduced, which allows the longer use of the solution without purification.

Thus, the process of the present invention allows for using a buffered aqueous solution for at least 20 days, preferably for at least 30 days, without purification in a sulfate dioxide absorption process. Such a long time period would even allow for a batch-wise purification of the aqueous buffered solution instead of a continuous one.

Further, as the temperature of the aqueous solution can be reduced, the heat needed to increase the temperature of the desorption process may be provided by warm liquid water, for example. The needed energy to heat the aqueous solution may be derived from waste heat from an industrial process which is performed locally close to the process of the present invention, for example.

In a preferred embodiment, the sulphur dioxide obtained from the aqueous solution according to a preferred embodiment of the process of the present invention is used in exothermic chemical process and the therefrom obtain thermal energy is further preferably used for heating the aqueous solution for the desorption of the sulfur dioxide. The exothermic chemical process can be any chemical process. Preferably, the exhaust thermic chemical process is the oxidation of sulphur dioxide to sulphur trioxide and/or the reaction between said sulphur trioxide and water to sulphuric acid.

Alternatively, and also preferred, the energy needed to heat the aqueous solution for the desorption process is obtained from any heat source, which is not used The expression "heat source which is not used" means for example waste heat from a process which may not be in direct connection with the process of the present invention. This waste heat occurs preferably at a place close to where the process of the present invention is performed. Alternatively, and also preferred, naturally occurring heat from geothermal sources for example may be used as well.

Thus, the process of the present invention provides for the first time a process for the desorption of sulfur dioxide from an aqueous solution in which the formation of sulfates can significantly be reduced compared to conventional processes.

In the process according to the present invention, the aqueous acid solution may be collected after removal of the sulfur dioxide. After, it can be used again for absorbing sulphur dioxide from effluent gases. To do so, it is essential to have low concentration of sulfates in the aqueous solution to provide an effective absorption.

The aqueous solution is an aqueous solution of at least one organic acid. This organic carboxylic acid may have one, two or three carboxylic groups. It may further comprise hydroxyl groups at the C-chain. The organic carboxylic acid is of course water soluble. The water solubility also limits the length of the C-chain of the acid. Nevertheless, the water solubility is not only depending on the length of the C-chain but also on the number of carboxylic groups as well as eventually present hydroxy groups. It is common knowledge for a skilled person to select an organic carboxylic acid which is sufficiently soluble in water. This acid is preferably selected from citric acid, succinic acid, glutaric acid, adipic acid, phenolic acid, maleic acid, melonic acid, citric acid, or a mixture of two or more of those acids. Preferably, one organic acid or a mixture of two or more organic acids is used. Especially preferred, glutaric acid is used as organic acid, as it provides the best absorption and desorption of sulphur dioxide from the aqueous solution.

The absorbent solution, independently of whether it contains one, two or more organic acids, is buffered to pH values from the acidic into close to neutral. There pH ranges, preferably from 2.5 to 6.5. Especially preferred, there pH is in the range of from 3.5 to 5.5. When buffering to pH values above 7, small amounts of salts of the organic acid are formed, which need to be removed. Accordingly, the pH should be below 7 preferably. Buffering is carried out with alkalis, where all alkaline reacting carbonates and hydroxides in dissolved or solid form can be used. For reasons of economy, however, sodium and/or potassium hydroxide or sodium and/or potassium carbonates are preferably used.

The concentration of organic acid in the aqueous solution is within a range of from 10% to 100% by weight, preferably from 20% to 80% by weight (i.e. g of organic acid per g of water). In this concentration, the absorption of sulfur dioxide is well performed.

In the dicarboxylic acid solution, sulfites will be oxidized in small amounts into sulfates, which have to be removed from the solution to secure the absorption capability of the dicarboxylic acid solution. Surprisingly it was found, that at lower temperatures, the formation of sulfates is tremendously reduced. For example, reducing the temperature from 115 °C, which is the common temperature for desorption processes, to 90 °C, results in a reduction of sulfate formation of about 75%. A further decrease of the temperature, which is enabled by the method of the present invention, results in a reduction of sulfate formation of up to 95% and even up to 99%. Accordingly, the dicarboxylic acid solution can be used for a longer period of time without the need of removing sulfates.

It is within the scope of the present invention that any embodiment or feature mentioned above can be combined with each other without limitation. The subsequent Example provides information about the process of the present invention without limiting it to the specific example.

### Example

The oxidation of sulfite to sulfate in a carboxylic acid solution was tested in laboratory scale at different temperatures.

One sample of an aqueous buffered solution was taken after desorption of sulfur dioxide in a conventional process. The solution comprised a mixture of glutaric acid, succinic acid and adipic acid as carboxylic acid and sodium hydroxide as buffer. The concentration of the carboxylic acid was 31% by weight and the concentration of sodium hydroxide was 12% by weight. The pH of the solution was 4,8 prior to the absorption of sulfur dioxide.

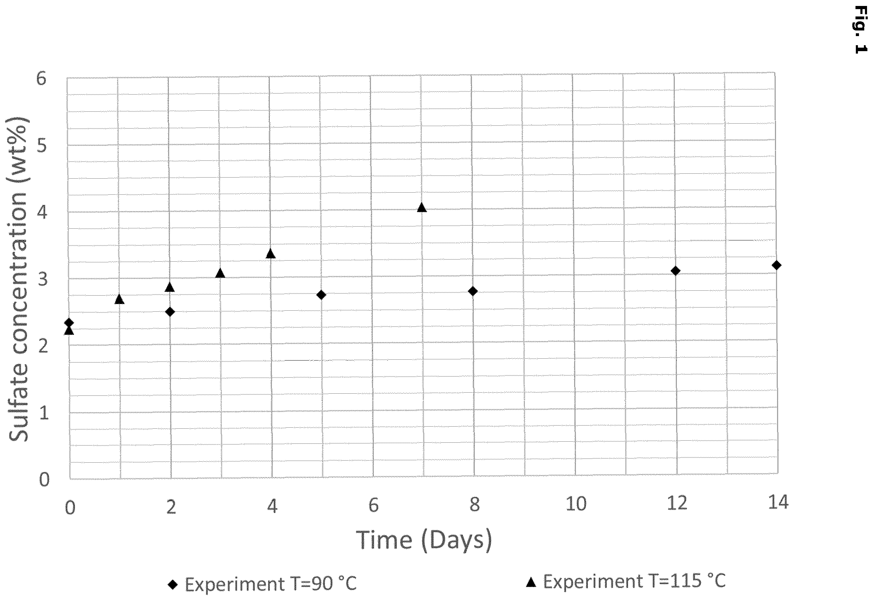

In laboratory the sample was divided in several charges, which were hold at different temperatures over a time period up to two weeks. In time intervals the solution was analyzed. Figure 1 shows the results. It is clearly shown that a reduction of the temperature results in a massive reduction of sulfate formation.

The results show that the formation of sulfates as such cannot be avoided. As soon as sulfur dioxide is present in the buffered aqueous solution, it is at least partly oxidized resulting in the formation of SO₄²⁻ ions. These react with cations in the solution, which usually originate from the buffer used in the solution.

The concentration of sulfate directly after obtaining the sample after the SO₂ desorption was about 2.2 weight-%, i.e. 2.2 gram of a 100 gram sample were sulfate. After one day of storage at 115 °C, the concentration was already at 2.8 weight-%, whereas this value was only reached after 5 days if the sample was stored at 90 °C. This shows that the formation rate of sulfate was reduced by a factor of about 75%.

The results further show that after 7 days of storing at 115 °C, which would be a normal process temperature, the concentration of sulfate rises to 4 weight-%. At such a concentration, the solution cannot effectively be used for absorption anymore. If the temperature is reduced to 90 °C, this value is not reached even after two weeks.

The process of the present invention thus allows for a longer use of the solution without purification.

## Claims

1. A process to reduce the formation of sulfate to at least 70% in a buffered aqueous solution during the desorption of sulfur dioxide from said buffered aqueous solution, wherein the aqueous solution comprises at least one carboxylic acid, and wherein the desorption of sulfur dioxide from the buffered solution is performed at a temperature of 110 °C or below..

2. The process according to claim 1, wherein the carboxylic acid is an organic acid with one, two or three carboxylic groups.

3. The process according to claim 2, wherein the carboxylic acid is citric acid, succinic acid, glutaric acid, adipic acid, phenolic acid, maleic acid, melonic acid, citric acid, or a mixture of two or more of those, preferably it is glutaric acid.

4. The process according to one or more of claims 1 to 3, wherein buffering of the aqueous solution is carried out with alkalis, where all alkaline reacting carbonates and hydroxides in dissolved or solid form can be used, preferably buffering is carried out with sodium and/or potassium hydroxide or sodium and/or potassium carbonates.

5. The process according to one or more of claims 1 to 4, wherein the desorption of sulfur dioxide from the buffered solution is performed at a pressure of 1500 mbar or below, preferably from 10 mbar to 1200 mbar, preferably from 50 mbar to 1000 mbar, preferred from 100 mbar to 900 mbar, especially from 150 mbar to 800 mbar, especially preferred from 200 mbar to 750 mbar.

6. The process according to one or more of claims 1 to 5, wherein the temperature at which the desorption takes place is 100 °C or below, preferably from 25 °C to 100 °C, especially from 30 °C to 95 °C, preferred from 35 °C to 90 °C, especially preferred from 40 °C to 85 °C..

7. The process according to one or more of claims 1 to 6, wherein the formation of sulfates in the aqueous solution is reduced to at least 75 %, preferably up to 95 %, especially up to 99 %.

8. The process according to one or more of claims 1 to 7, wherein the sulfur dioxide removed from the aqueous solution is subsequently used in a chemical process, preferably an exothermic process.

9. The process according to claim 8, wherein the exothermic chemical process is the oxidation of sulfur dioxide to sulfur trioxide and/or the reaction between said sulfur trioxide and water or sulfuric acid.

10. The process according to claim 8 or 9, wherein the energy from the exothermic process is used for tempering the aqueous solution.
